## Europäisches Patentamt
## European Patent Office
## Office européen des brevets

(19)

(11) Numéro de publication: **0 112 196**
**B1**

(12)
# FASCICULE DE BREVET EUROPÉEN

(45) Date de publication du fascicule du brevet:
**17.12.86**

(21) Numéro de dépôt: **83402121.4**

(22) Date de dépôt: **28.10.83**

(51) Int. Cl.⁴: **C 08 L 81/04, C 08 L 27/02**

(54) **Alliage de polymères, sa préparation et son application à la fabrication d'éléments de réacteurs électrochimiques.**

(30) Priorité: **03.11.82 FR 8218408**

(43) Date de publication de la demande:
**27.06.84 Bulletin 84/26**

(45) Mention de la délivrance du brevet:
**17.12.86 Bulletin 86/51**

(84) Etats contractants désignés:
**AT BE CH DE GB IT LI LU NL SE**

(56) Documents cité:
**EP-A-0 089 206**
**FR-A-2 226 438**
**US-A-3 487 454**
**US-A-3 567 666**
**US-A-4 075 158**

**Le dossier contient des informations techniques présentées postérieurement au dépôt de la demande et ne figurant pas dans le présent fascicule.**

(73) Titulaire: **ELECTRICITE DE FRANCE Service National, 2, rue Louis Murat, F-75008 Paris (FR)**

(72) Inventeur: **Bailleux, Christian, 31, villa Curial, 75019 Paris (FR)**
Inventeur: **Bernard, Michel, 14, rue du Pr. Ramond, 60700 Pont- Ste- Maxence (FR)**
Inventeur: **Dupont, Bernard, Place des trois rois, Nogent s/oise 60100 Creil (FR)**
Inventeur: **Lozach, Guy, 28 avenue Marie- Amélie, 60500 Chantilly (FR)**
Inventeur: **Mata, Jean- Pierre, 167, rue de la Convention, 75015 Paris (FR)**

(74) Mandataire: **Ahner, Francis, CABINET REGIMBEAU 26, avenue Kléber, F-75116 Paris (FR)**

## Description

La présente invention concerne un nouvel alliage de polymères, sa préparation et son application à la fabrication d'éléments de réacteurs électrochimiques. L'invention concerne notamment l'application de cet alliage de polymères à la fabrication de cadres pour cellules électrolytiques alcalines fonctionnant à haute température, en particulier destinées à assurer l'électrolyse alcaline de l'eau.

La présente invention permet de réaliser des cadres pour l'empilement filtre presse d'un électrolyseur par exemple destiné à assurer une électrolyse alcaline et plus particulièrement l'électrolyse alcaline de l'eau à haute température.

Les cadres constituent l'ossature de l'électrolyseur et contiennent l'électrolyte. Ils doivent assurer l'étanchéité au liquide et aux dégagements gazeux en surpression par rapport au milieu ambiant. Ils assurent la mise en place géométrique des éléments de la cellule, tels que les électrodes et le diaphragme. En particulier, ils définissent l'écartement entre ces composants.

Les cadres permettent en outre la circulation des fluides vers l'intérieur et vers l'extérieur des cellules au moyen d'orifices précisément calibrés. Ils assurent donc la distribution du fluide à l'entrée et la collecte des émulsions en sortie.

Enfin, les cadres doivent assurer l'isolement électrique des électrodes adjacentes.

L'ensemble de ces caractéristiques fonctionnelles doit être maintenu pendant toute la durée de vie de l'installation, dans l'environnement agressif constitué par l'électrolyte concentré et chaud (par exemple: 80 000 heures dans la potasse à 40 %, à une température de l'ordre de 120°C, sous ne pression interne d'oxygène et d'hydrogène de 30 à 60 bars).

Dans l'état actuel de la technique, on ne trouve pas d'installation industrielle permettant d'atteindre de hautes températures de l'ordre de 120°C en potasse concentrée. Diverses solutions ont cependant déjà été proposées pour la réalisation de tels cadres. Elles emploient généralement des polymères fluorés dont les inconvénients multiples condamnent ces solutions. Les polymères fluorés présentent en effet un fluage important. Leur mise en forme en série industrielle par injection se révèle impraticable dans l'état de l'art actuel même pour des dimensions moins importantes que celles qui sont envisagées. Leur coefficient de dilatation est d'un ordre de grandeur plus important que celui des électrodes à maintenir ce qui pose des problèmes mécaniques. L'évolution de la géométrie par relaxation après injection produit des déformations incompatibles avec la fonction d'injecteur de fluide.

La solution proposée dans le cadre de la présente invention repose sur l'élaboration d'un alliage de polymères. Il s'agit d'incorporer, sous forme d'une structure adéquate, un polymère fluoré chimiquement inerte et hydrophobe à une matrice de polymère thermostable. Le polymère thermostable apporte au composé ses propriétés mécaniques, tandis que le polymère fluoré hydrophobe constitue une barrière anticorrosion en bloquant la pénétration de la solution agressive. La structure de la dispersion de polymère fluoré dans la matrice doit être organisée de façon telle qu'elle se comporte vis-à-vis de l'agent agressif comme le ferait une phase continue du même matériau, de façon à constituer un écran en surface, quelle que soit l'orientation de la face laissée en regard du milieu réactif.

L'alliage de polymères selon l invention est caractérisé en ce qu'il est obtenu par extrusion et/ou injection à une température comprise entre 250°C et 320°C, d'une matrice de matière thermostable constituée par une résine de polysulfure de phénylène et d'une charge de résine polymère fluorocarbonée, l'extrusion et/ou l'injection développant un réseau de fibres de charge inter-connectées et interpénétrées au sein de la matrice.

Conformément à la présente invention, le procédé de préparation d'un tel alliage de polymère, par exemple en vue de fabriquer des éléments de réacteurs électrochimiques, est caractérisé en ce que l'alliage de polymères est obtenu par extrusion et/ou injection à une température comprise entre 250 et 320°C d'une résine polysulfure de phénylène et d'une charge dé résine polymère fluorocarbonée.

Les alliages de polymères conformes à la présente invention résistent de façon satisfaisante à l'attaque par l'électrolyte alcalin tout en présentant des caractéristiques thermomécaniques très favorables. Ces caractéristiques sont le module en traction et en compression instantanées, et la résistance au fluage. Par ailleurs, des éléments de réacteurs électrochimiques, tels que des cadres, peuvent être produits en série industrielle à bas coût par un procédé d'injection sous pression d'un tel alliage de polymères.

En outre, les éléments tels que les cadres conformes à la présente invention ne demandent pas d'usinage supplémentaire, ce qui est un avantage décisif pour le coût de réalisation. La fidélité de reproduction est excellente et permet de confier aux pièces produites des fonctions requérant une tolérance de réalisation serrée, sans incidence sur le coût. Le retrait au refroidissement est très inférieur à celui des matières fluorées.

Il convient enfin de noter que la géométrie des éléments tels que les cadres selon l'invention est définie avec précision et n'est pas sensible à l'élévation de température. Le coefficient de dilatation de tels éléments est comparable à celui des électrodes, ce qui simplifie la conception de l'électrolyseur ou de l'accumulateur. Enfin, le matériau ainsi obtenu est beaucoup moins fragile que les matériaux de base, ce qui permet de s'affranchir de précautions spéciales pour l'assemblage des différentes pièces des cellules électrolytiques et des réacteurs électrochimiques en général.

D'autres caractéristiques de la présente invention apparaîtront à la lecture de la description détaillée faite ci-après.

La matrice des alliages de polymères selon l'invention est constituée par une résine de polysulfure de phénylène (PPS). Dans la pratique, il est apparu que l'utilisation de résine polysulfure de phénylène permet d'atteindre des gammes d'utilisation supérieures à 150°C. A titre d'exemple particulier de telles résines PPS, on mentionnera la résine commercialisée par la Société phillips sous la dénomination "RYTON® P4".

Conformément à la présente invention, l'alliage de polymères est obtenu par extrusion et/ou injection d'une telle matrice et d'une charge de résine polymère fluorocarbonée. Une telle charge peut être choisie parmi les resines de polytétrafluoroéthylène, telles que la résine commercialisée par la Société PCUK sous la dénomination "SOREFLON® 71", ou encore parmi des dispersions de copolymères fluorés fusibles, tels que du polyfluoroéthylène, poly(éthylène/propylène)perfluoré ou du polyperfluoroalkoxy.

L'extrusion, effectuée à une température sensiblement comprise entre 250°C et 320°C, développe, du fait des forces de cisaillement engendrées, un réseau de fibres de charge inter-connectées et intimement interpénétrées au sein de la matrice. On obtient ainsi un alliage dont les deux phases sont morphologiquement continues. Un échantillonnage d'alliages de taux allant de 5 % jusqu'à 40 % en poids a été réalisé avec la même structure maillée, avec un maillage de plus en plus serré lorsque le taux est augmenté. Le voile présenté en surface constitue un écran protecteur contre l'agression de la potasse. Dans la pratique on a constaté qu'il n'est pas indispensable que ce voile se présente comme une surface rigoureusement continue, à condition que la maille du treillis soit suffisamment dense pour que le voile hydrophobe apparaisse comme virtuellement impénétrable à l'échelle des phénomènes capillaires.

Les essais de corrosion pratiqués sur un millier d'heures confirment la démarche théorique. Les propriétés mécaniques de la matrice ne sont nullement altérées par l'incorporation de la charge. Bien au contraire, alors que le PPS est un matériau fragile et cassant, on a constaté que l'incorporation de la charge fluorocarbonée stabilise le matériau, ce qui a été mis en évidence par la sollicitation en flexion. Par ailleurs, on observe de façon surprenante une amélioration sensible des propriétés mécaniques en traction sur les alliages de PPS, par rapport au témoin non allié. Pour des taux de charge modérés, le module de traction est nettement renforcé. L'amélioration la plus spectaculaire porte sur les caractéristiques à la rupture, en contrainte et en allongement. Cette amélioration peut être au moins partiellement attribuée à la meilleure maîtrise de la mise en forme de l'alliage par rapport au matériau non allié.

La technique mise en oeuvre du procédé selon l'invention consiste en une extrusion du mélange, suivie d'injection. Il est donc possible de réaliser en série des pièces de forme complexe comportant des profils, canaux, éléments de circulation de fluide, emboîtements, ergots de mise en place, etc., au faible coût qui est celui de l'injection des thermoplastiques usuels.

On indiquera ci-après à titre d'exemple non limitatif un mode de mise en oeuvre particulier de l'invention.

1) mélange au mélangeur rapide (tel que PAPENMEIER) des constituants suivants:
- poudre de polysulfure de phénylène PPS® (Ryton P4)
- poudre de polytétrafluoroéthylène tel que (SOREFLON® 71)
- poudre de stéarate de zinc par exemple (STAVINOR® ZNE de la Société Rousselot)

L'addition au mélange d'un lubrifiant interne, tel que le stéarate de zinc, facilite la prise de vis au niveau de l'extrusion du granulat sans influencer les propriétés des pièces obtenues.

Le mélange peut comporter de 5 à 40 pourcent en poids de charge fluorocarbonée.

Les mélanges contenant de 20 à 40 % ont conduit aux meilleurs résultats.

Cette opération peut durer de l'ordre de 10 minutes. Le mélange est ensuite séché dans une étuve ventilée à 120°C avant extrusion.

2) extrusion

Le mélange est extrudé sur une extrudeuse. Lorsqu'une extrudeuse à vis est utilisée on pourra, bien que les conditions opératoires puissent dépendre du matériel utilisé, se référer par exemple aux conditions suivantes non limitatives, relatives à une extrudeuse Samafor® 45 à vis bi-étagée de diamètre 45 mm, et de longueur 28 D:
- zone 1 = 300°C
- zone 2 = 300°C
- zone 3 = 300°C
- zone 4 = 300°C
- filière: 300°C

vitesse de rotation de 30 à 40 tours/minute pour un débit de 10 à 15 kg/h. Le jonc obtenu passe dans un granulateur.

Dans la pratique, il s'est avéré avantageux d'effectuer l'extrusion entre 250°C et 320°C pour le PPS.

3) injection

Les conditions opératoires dépendent du matériel utilisé. A titre d'exemple, on décrit un des procédés qui donne satisfaction sur une presse "ARBURG ALLROUNDER" à vis de 20 mm de diamètre et 30 cm de largeur, à deux corps de chauffe et buse thermorégulée:
- zone 1 = 320°C
- zone 2 = 305°C
- buse = 245°C

Température du moule = 90°C

Pression = 1350 bars

Cycle d'injection = (temps total 55s)

Fermeture = 1s

Injection et maintien: 7s

Dosage (repère 4,8; 300 tours/min.) = 10s
Refroidissements = 46s
Ouverture = ls.

Il est clair que les températures d'injection peuvent subir quelques variations. C'est ainsi que des résultats tout à fait satisfaisants sont par exemple obtenus pour des températures d'injection de valeurs approximatives suivantes:

|  | corps de chauffe | buse | moule | pression hydraulique |
|---|---|---|---|---|
| PPS | 250–320°C | 250–280°C | env. 135°C | 90 bars |

L'invention s'applique en particulier à la réalisation de tout type d'articles moulés par injection à partir de l'alliage de polymères décrit.

**Revendications**

1. Alliage de polymères pour la réalisation d'éléments de structure de réacteurs électrochimiques, en particulier de cadres pour cellules électrolytiques alcalines fonctionnant à haute température, caractérisé en ce qu'il est obtenu par extrusion et/ou injection à une température comprise entre 250°C et 320°C, d'une matrice de matière thermostable constituée par une résine de polysulfure de phénylène, et d'une charge de résine polymère fluorocarbonée présente à raison de 20 à 40 % en poids, l'extrusion et/ou l'injection développant un réseau de fibres de charge interconnectées et interpénétrées au sein de la matrice.

2. Alliage de polymères selon la revendication 1, caractérisé en ce que la charge de résine polymère fluorocarbonée est constituée par du polytétrafluoroéthylène.

3. Alliage de polymères selon la revendication 1, caractérisé en ce que la charge de résine polymère fluorocarbonée est constituée par une dispersion de copolymères fluorés fusibles tels que du poly(éthylène/propylène)perfluoré ou du polyperfluoroalcoxy.

4. Alliage de polymères selon l'une des revendications 1 à 3, caractérisé en ce qu'il contient en outre un lubrifiant interne, tel que du stéarate de zinc.

5. Procédé de préparation d'un alliage de polymères selon l'une des revendications 1 à 4, caractérisé en ce que l'on réalise l'extrusion et/ou l'injection à une température comprise entre 250°C et 320°C d'une matrice de matière thermostable constituée par une résine de polysulfure de phénylène et d'une charge de résine polymère fluorocarbonée présente à raison de 20 à 40 % en poids, l'extrusion et/ou l'injection développant un réseau de fibres de charge interconnectées et interpénétrées au sein de la matrice.

**Patentansprüche**

1. Kunststofflegierung (Polymerblend) für Bauteile von elektrochemischen Reaktionsgefäßen insbesondere für Rahmen für Alkali-Elektrolysezellen die bei hoher Temperatur betrieben werden, dadurch gekennzeichnet daß sie erhalten worden ist durch Extrudieren und/oder Spritzgießen bei einer Temperatur im Bereich zwischen 250°C und 320°C, einer Matrix aus thermostabilem Material aus einem Polyphenylensulfid-Harz, und aus einem Füllstoff aus Fluorkohlenstoff-Polymerharz, der in einer Menge von 20 bis 40 Gew.-% vorhanden ist, wobei durch das Extrudieren und/oder Spritzgießen ein Netz aus miteinander verbundenen und ineinandergreifenden Fasern des Füllstoffes im Innern der Matrix ausgebildet wird.

2. Kunststofflegierung nach Anspruch 1, dadurch gekennzeichnet, daß der Fluorkohlenstoff-Polymerharz-Füllstoff aus Polytetrafluorethylen besteht.

3. Kunststofflegierung nach Anspruch 1, dadurch gekennzeichnet, daß der Fluorkohlenstoff-Polymerharz-Füllstoff aus einer Dispersion von schmelzbaren Fluorcopolymeren, wie Polyperfluor(ethylen/propylen) oder Polyperfluoralkoxy, besteht.

4. Kunststofflegierung nach einem der Ansprüche 1 bis 3, dadurch gekennzeichnet, daß sie außerdem ein internes Schmiermittel, wie Zinkstearat, enthält.

5. Verfahren zur Herstellung einer Kunststofflegierung (Polymerblend) nach einem der Ansprüche 1 bis 4, dadurch gekennzeichnet, daß man das Extrudieren und/oder Spritzgießen bei einer Temperatur im Bereich zwischen 250°C und 320°C durchführt mit einer Matrix aus thermostabilem Material aus einem Polyphenylensulfid-Harz und einem Füllstoff aus Fluorkohlenstoff-Polymerharz, das in einer Menge von 20 bis 40 Gew.-% vorhanden ist, wobei durch das Extrudieren und/oder Spritzgießen ein Netz aus miteinander verbundenen und ineinandergreifenden Fasern des Füllstoffes im Innern der Matrix ausgebildet wird.

## Claims

1. Polymer alloy for the production of structural components of electrochemical reaction vessels, especially frames for alkaline electrolytic cells operating at high temperature, characterized in that it is obtained by extrusion and/or injection, at a temperature between 250°C and 320°C, of a matrix of heat-stable material consisting of a poly(phenylene sulphide) resin and a filler of fluorocarbon polymeric resin which is present in the proportion of 20 to 40% by weight, the extrusion and/or injection giving rise to a network of interconnected and interpenetrated fibres of filler within the matrix.

2. Polymeric alloy according to Claim 1, characterized in that the filler of fluorocarbon polymer resin consists of polytetrafluoroethylene.

3. Polymeric alloy according to Claim 1, characterized in that the filler of fluorocarbon polymer resin consists of a dispersion of fusible fluorinated copolymers such as perfluorinated poly(ethylene/propylene) or polyperfluoroalkoxy.

4. Polymeric alloy according to one of Claims 1 to 3, characterized in that it contains, in addition, an internal lubricant such as zinc stearate.

5. Process for preparing a polymeric alloy according to one of Claims 1 to 4, characterized in that there is carried out the extrusion and/or injection, at a temperature between 250°C and 320°C, of a matrix of heat-stable material consisting of a poly(phenylene sulphide) resin and a filler of fluorocarbon polymer resin which is present in the proportion of 20 to 40% by weight, the extrusion and/or injection giving rise to a network of interconnected and interpenetrated fibres of filler within the matrix.